# EUROPÄISCHE PATENTSCHRIFT

(11) **EP 1 716 018 B1**
(45) Veröffentlichungstag und Bekanntmachung des Hinweises auf die Patenterteilung: **12.05.2010**
(21) Anmeldenummer: 05715225.8
(22) Anmeldetag: 29.01.2005
(51) Int. Cl.: B60R 11/04, F16M 11/04, H04N 5/225

(54) **KAMERASYSTEM, INSBESONDERE FÜR EIN UMFELDERFASSUNGSSYSTEM EINES FAHRZEUGS**
CAMERA SYSTEM, IN PARTICULAR FOR AN ENVIRONMENT DETECTION SYSTEM OF A VEHICLE
SYSTEME CAMERA DESTINE NOTAMMENT A UN SYSTEME DE DETECTION D'ENVIRONNEMENT D'UN VEHICULE

(30) Priorität: 20.02.2004 DE 102004009920
(43) Veröffentlichungstag der Anmeldung: 02.11.2006
(73) Patentinhaber: Valeo Schalter und Sensoren GmbH, 74321 Bietigheim-Bissingen (DE)
(72) Erfinder: CYWINSKI, Thorsten, 71691 Freiberg (DE); MEYER, Thorsten, 74321 Bietigheim-Bissingen (DE); BAYHA, Heiner, 71665 Vaihingen/Enz (DE); BRIEM, Rolf, 74177 Bad Friedrichshall (DE); JOHN, Karl-Heinz, 86650 Wemding (DE); STENZENBERGER, Thomas, 86650 Wemding-Amerbach (DE)
(74) Vertreter: Pothmann, Karsten
(86) Internationale Anmeldenummer: PCT/EP2005/000894
(87) Internationale Veröffentlichungsnummer: WO 2005/090127

(56) Entgegenhaltungen:
- PATENT ABSTRACTS OF JAPAN Bd. 2002, Nr. 12, 12. Dezember 2002 (2002-12-12) & JP 2002 247426 A (MITSUBISHI ELECTRIC CORP), 30. August 2002 (2002-08-30)
- PATENT ABSTRACTS OF JAPAN Bd. 010, Nr. 061 (E-387), 11. März 1986 (1986-03-11) & JP 60 212070 A (SONY KK), 24. Oktober 1985 (1985-10-24)
- PATENT ABSTRACTS OF JAPAN Bd. 2000, Nr. 24, 11. Mai 2001 (2001-05-11) & JP 2001 188155 A (KUURII COMPONENTS KK; SHINTEN SANGYO CO LTD), 10. Juli 2001 (2001-07-10)
- PATENT ABSTRACTS OF JAPAN Bd. 2003, Nr. 12, 5. Dezember 2003 (2003-12-05) & JP 2004 055959 A (KYOCERA CORP), 19. Februar 2004 (2004-02-19)
- PATENT ABSTRACTS OF JAPAN Bd. 2002, Nr. 05, 3. Mai 2002 (2002-05-03) & JP 2002 006378 A (FUJITSU GENERAL LTD), 9. Januar 2002 (2002-01-09)

## Beschreibung

Die Erfindung betrifft ein Kamerasystem, insbesondere für ein Umfelderfassungssystem eines Fahrzeuges, mit einem Halterahmen zur Halterung eines Optikträgers, dessen Optik zur Führung von einfallendem Licht auf einen Bildaufnehmer dient. Die Erfindung betrifft außerdem einen Halterahmen für ein derartiges Kamerasystem und ein Verfahren zum Justieren der die Optik aufweisende Optikträger gegenüber dem Bildaufnehmer.

Aus dem Stand der Technik sind Kamerasysteme für Umfelderfassungssysteme von Fahrzeugen bekannt. Derartige Umfelderfassungssysteme erfassen das Fahrzeugumfeld und liefern Informationen für weitere Fahrzeugsysteme oder für den Fahrzeuglenker. So sind beispielsweise Umfelderfassungssysteme bekannt, mit denen der rückwärtige Bereich des Fahrzeuges mittels einer Kamera erfasst wird. Andere Systeme liefern Informationen bei Nachtfahrten (Night Vision). Außerdem sind Systeme bekannt, die Kameras umfassen, mit denen überwacht wird, ob der Fahrer sich innerhalb der Fahrbahn befindet (Line Detection Warning Systems).

Die bekannten Kamerasysteme umfassen jeweils einen Objektträger mit einer Optik, insbesondere mit ein oder mehreren Linsen. Außerdem ist ein Bildaufnehmer vorgesehen, beispielsweise ein Imager Chip beziehungsweise Bildsensor-Chip.

Bei der Montage des Kamerasystems ist darauf zu achten, dass der Optikträger, mit der Optik, eine vorgegebne Solllage zum Bildaufnehmer einnimmt. Nur dann ist gewährleistet, dass der Bildaufnehmer tatsächlich das Bild erfasst, was erfasst werden soll.

Aus der JP 2002 247 426 ist ein gattungsgemäßes Kamerasystem bekannt geworden, bei dem der Optikträger hinsichtlich des Halterahmens ausgerichtet und am Halterahmen angeschraubt wird.

Der vorliegenden Erfindung liegt die Aufgabe zugrunde, ein Kamerasystem bereitzustellen, bei dem die Optik gegenüber dem Bildaufnehmer auf einfache Art und Weise justiert und dann dauerhaft fixiert werden kann. Dabei sollen möglichst wenig Einzelteile Verwendung finden und das Kamerasystem soll einfach und platzsparend bauen.

Diese Aufgabe wird durch ein Kamerasystem mit den Merkmalen des Anspruchs 1 gelöst.

Durch Vorsehen der zu dem Bildaufnehmer parallelen Auflagefläche kann der Optikträger in lediglich zwei Raumrichtungen verschoben werden. Eine zum Bildaufnehmer nicht parallele Anordnung der Optik kann damit nicht erfolgen. Durch die Verschiebbarkeit des Optikträgers auf der Auflagefläche des Halterahmens kann der Optikträger auf einfache Art und Weise, manuell oder automatisch, so lange in die richtige Position verschoben werden, bis die Sollposition erreicht ist. Bei Erreichen der Solllageposition kann der Optikträger am Halterahmen dauerhaft fixiert werden.

Eine bevorzugte Ausführungsform der Erfindung sieht vor, dass der Halterahmen beziehungsweise der Optikträger Vorspannmittel umfasst, die dazu geeignet sind, den Optikträger gegen die Auflagefläche zu drücken. Derartige Vorspannmittel, die den Optikträger beziehungsweise Halterahmen wenigstens abschnittsweise um- und/oder hintergreifen können, haben den Vorteil, dass der Optikträger nicht in die dritte Raumrichtung, also senkrecht zur Ebene des Bildaufnehmers, ohne Weiteres bewegt werden kann. Dadurch wird gewährleistet, dass beim Verschieben des Optikträgers dieser lediglich in der Ebene der Auflagefläche bewegt wird. Durch das Andrücken des Optikträgers gegen die Auflagefläche wird außerdem erreicht, dass der Optikträger nicht selbsttätig, beispielsweise aufgrund seines Eigengewichts, sich gegenüber dem Halterahmen bewegt.

Vorteilhafterweise können die Vorspannmittel als die Auflagefläche beziehungsweise Anlagefläche übergreifende, wenigstens senkrecht zur Auflagefläche elastisch nachgiebige Stege ausgebildet sein, die den Optikträger beziehungsweise Halterahmen in der Justier- und/oder Solllageposition hintergreifen. Derart elastisch nachgiebige Stege können beispielsweise einstückig mit dem Halterahmen und/oder Optikträger verbunden sein, beziehungsweise an den Halterahmen und/oder Optikträger angeformt sein. Aufgrund der elastischen Nachgiebigkeit kann der Optikträger gegen den Halterahmen angedrückt werden.

Bei einer weiteren Ausgestaltung der Erfindung ist vorgesehen, dass der Halterahmen derart ausgebildet ist, dass der Optikträger in der Solllageposition mit dem Halterahmen unlösbar verbindbar ist. Eine unlösbare Verbindung kann beispielsweise durch Verkleben oder Verschweißen des Optikträgers mit dem Halterahmen erfolgen.

Als besonders vorteilhaft hat sich herausgestellt, wenn der Halterahmen beziehungsweise Optikträger aus einem ersten Kunststoff ist und wenn der Optikträger beziehungsweise Halterahmen wenigstens abschnittsweise aus einem zweiten, derart lichttransparenten Kunststoff ist, dass zur unlösbaren Verbindung die Auflagefläche mit der Anlagefläche des Halterahmens verschweißbar ist. Eine Verschweißung erfolgt dabei insbesondere im Laserschweißverfahren. Aufgrund des lichttransparenten Kunststoffes wird dabei gewährleistet, dass die beiden Materialien an ihren aneinander liegenden Oberflächen aufschmelzen. Die Laserstrahlen können den entsprechend lichttransparenten Kunststoff durchdringen, ohne ihn dabei zu beschädigen. Eine Verschweißung kann insbesondere in den Eckbereichen des Optikträgers stattfinden.

Eine weitere, bevorzugte Ausführungsform der Erfindung sieht vor, dass die Auflagefläche beziehungsweise Anlagefläche an wenigstens zwei Seiten wenigstens abschnittsweise durch Begrenzungsstege begrenzt ist. Durch derartige Bengrenzungsstege ist die Verschiebbarkeit des Optikträgers auf der Auflagefläche des Halterahmens begrenzt. Einem ungewollten, zu weitem Verschieben und gegebenenfalls Abrutschen des Optikträgers von dem Halterahmen wird damit entgegengewirkt.

Vorteilhafterweise ist dabei denkbar, dass die Anlagefläche des Optikträgers über eine Seite, an der kein Begrenzungssteg vorgesehen ist, auf die Auflagefläche einschiebbar ist.

Eine besonders vorteilhafte Ausgestaltung der Erfindung sieht vor, dass die Vorspannmittel an den Begrenzungsstegen angeordnet sind. Die Vorspannmittel können in diesem Zusammenhang einstückig mit den Begrenzungsstegen ausgebildet sein, beziehungsweise sie können an die Begrenzungsstege angeformt sein.

Um eine ausreichende Verschiebbarkeit des Optikträgers gegenüber dem Halterahmen zu gewährleisten, kann erfindungsgemäß vorgesehen sein, dass die Auflagefläche größere Abmessungen aufweist, als die auf der Auflagefläche zum Aufliegen kommende Lagefläche des Objektträgers.

Der Bildaufnehmer und/oder der Halterahmen können bei einer kompakten Bauweise des Kamerasystems unmittelbar auf einer Leiterplatte angeordnet sein. Der Bildaufnehmer kann mit Leiterbahnen der Leiterplatte verlötet sein. Der Halterahmen kann beispielsweise in Halteaussparungen eingesteckt oder mittels Schrauben mit der Leiterplatte verschraubt sein.

Die eingangs genannte Aufgabe wird außerdem gelöst durch ein Verfahren mit den Merkmalen des Anspruchs 12.

Erfindungsgemäß ist dabei denkbar, dass zur Bestimmung der Solllageposition ein geeignetes Testbild auf die Optik projiziert wird, und dass das Verschieben nach Schritt a) so lange erfolgt, bis die Position des Testbilds dem vom Bildaufnehmer aufgenommenen Bild der Solllageposition entspricht. Durch Vorsehen des Testbilds kann ein Justieren unter geeigneten Bedingungen erfolgen. Es kann gewährleistet werden, dass die Optik die Solllageposition gegenüber dem Bildaufnehmer aufweist.

In einer Ausgestaltung der Erfindung wird das dauerhafte Fixieren nach Erreichen der Justierposition durch Verschweißen und/oder Verkleben des Optikträgers mit dem Halterahmen erzielt.

Weitere Einzelheiten und Ausgestaltungen der Erfindung sind der folgenden Beschreibung zu entnehme, in der die Erfindung anhand der in der Zeichnung dargestellten Ausführungsbeispiele näher beschrieben und erläutert ist.

Es zeigen:
- Figur 1 bis 3: verschiedene Montageschritte einer ersten Ausführungsform der Erfindung;
- Figur 4: einen Schnitt entlang der Linie IV in Figur 3;
- Figur 5: einen Halterahmen und einen Linsenträger einer zweiten Ausführungsform der Erfindung;
- Figur 6: den Halterahmen nach Figur 5 in Einzelteildarstellung.

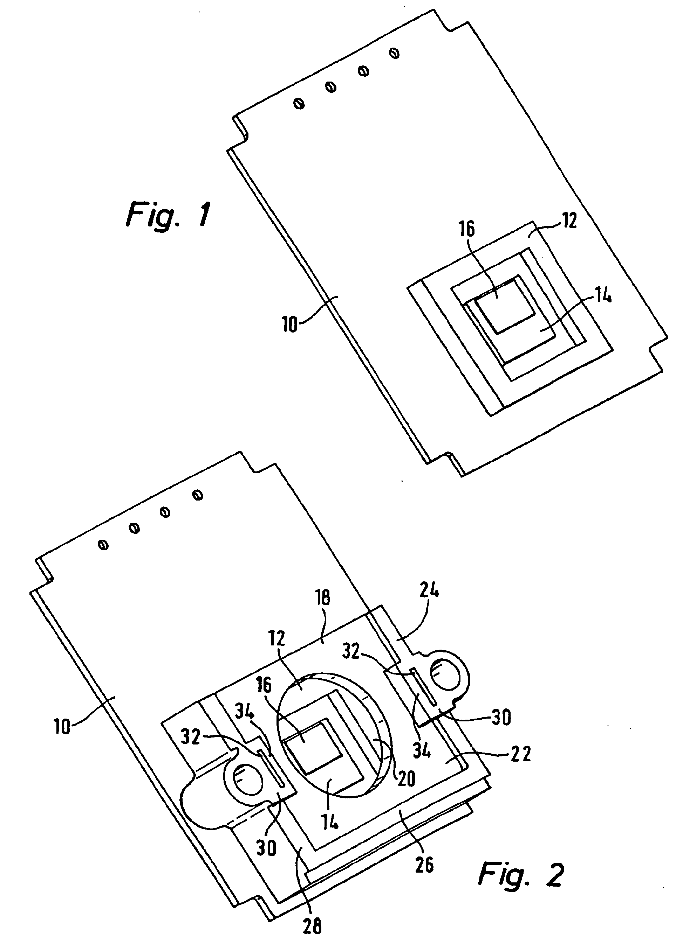

Das in den Figuren 1 bis 3 ausschnittsweise gezeigte Kamerasystem umfasst eine Leiterplatte 10, auf der eine Bildaufnehmerhalterung 12 samt Bildaufnehmer 14 angeordnet ist. Der Bildaufnehmer 14 weist eine fotosensitive Oberfläche 16 auf.

Wie in Figur 2 dargestellt ist, ist ein Halterahmen 18 über dem Bildaufnehmerhalter 12 samt Bildaufnehmer 14 angebracht. Der Halterahmen 18 weist einen zentralen Durchbruch 20 auf, durch den einfallendes Licht auf die fotosensitive Oberfläche 16 gelangen kann. Der Halterahmen 18 kann beispielsweise durch Verrastung oder mittels Schrauben an der Leiterplatte 10 angeordnet sein.

Der Halterahmen 18 weist eine rechteckige Auflagefläche 22 auf, die parallel zur Ebene des Bildaufnehmers 14 beziehungsweise parallel zur Leiterplatte 10 verläuft. In Figur 2 ist deutlich zu erkennen, dass die Auflagefläche 22 an insgesamt drei Seiten durch Begrenzungsstege 24, 26, 28 begrenzt wird. An den beiden gegenüberliegenden Begrenzungsstegen 24, 28 sind jeweils im mittleren Bereich Vorspannmittel 30 vorgesehen. Die Vorspannmittel 30 umfassen Stege 34, die die Auflagefläche 22 in Richtung des zentralen Durchbruchs 20 übergreifen. Die Stege 34 sind außerdem in zu der Auflagefläche 22 senkrechter Richtung bedingt elastisch ausgebildet. Zur Realisierung der elastischen Nachgiebigkeit sehen die Vorspannmittel 30 Längsschlitze 32 vor. Die Stege 34 sind von der Auflagefläche 22 um das Maß x beabstandet.

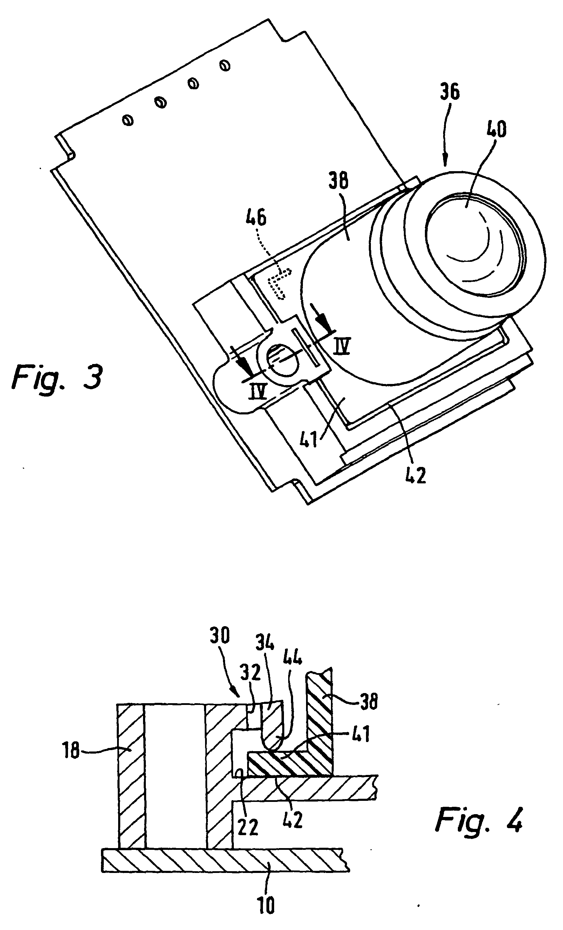

In der Figur 3 ist ein Linsenträger 36 dargestellt, der auf seiner dem Halterahmen 18 abgewandten Seite eine Optik 40 mit Linsen aufweist. Die Optik 40 ist dabei an dem freien Ende eines hülsenartigen Abschnitts des Optikträgers 38 angeordnet. Der Optikträger weist auf seiner dem Halterahmen zugewandten Seite einen Auflageabschnitt 41 mit einer Anlagefläche 42 auf, die auf der Auflagefläche 22 des Halterahmens 18 aufliegt. Die Abmessungen der Haltefläche 42 sind dabei kleiner als die Abmessungen der Auflagefläche 22. Dadurch wird erreicht, dass die Anlagefläche 42 des Optikträgers auf der Auflagefläche 22 des Halterahmens verschiebbar ist.

Der Optikträger 38 kann über die Seite der Auflagefläche 22, an der die Begrenzungsstege 24, 26 und 28 nicht vorgesehen sind, unter die Stege 34 der Vorspannmittel 30 geschoben werden. Die Dicke des Anlageabschnitts 41 ist dabei so gewählt, dass sie geringfügig größer ist, als der Abstand x zwischen der Auflagefläche 22 und den Stegen 34. Damit wird erreicht, dass die Stege 34 die Anlagefläche 42 gegen die Auflagefläche 22 drücken. Ein sicheres Anliegen der Anlagefläche 42 an der Auflagefläche 22 wird damit gewährleistet.

Der in der Figur 4 gezeigte Schnitt durch das Vorspannmittel 30 zeigt den Steg 34 sowie den Längsschlitz 32. Deutlich zu erkennen ist, dass der Steg 34 eine in Richtung der Auflagefläche 22 gewandte Nase 44 umfasst, die zur Anlage gegen den Anlageabschnitt 41 des Optikträgers 38 dient.

Zur Justierung der Optik 40 gegenüber dem Bildaufnehmer 14 kann vorteilhafterweise ein geeignetes Testbild auf die Optik 40 projiziert werden. Sollte die Position des von dem Bildaufnehmer aufgenommenen Bildes nicht der Solllageposition entsprechen, so kann der Optikträger 38 auf der Auflagefläche 22 so lange entsprechend verschoben werden, bis die Solllageposition erreicht ist.

Bei Erreichen der Solllageposition wird der Optikträger 38 mit dem Halterahmen 18 dauerhaft verbunden. Dies kann insbesondere durch Laserschweißen erfolgen. Dazu ist es vorteilhaft, wenn der Optikträger 38 aus einem entsprechend lichtdurchlässigen Material ist, das Laserstrahlen unbeschadet durchlässt. Die Laserstrahlen treffen dann im Bereich des Anlageabschnitts auf die unter dem Anlageabschnitt 41 liegende Auflagefläche 22. Dort wird das Material des Halterahmens aufgeschmolzen; ein Verschweißen des Optikträgers 38 und des Halterahmens 18 erfolgt hierdurch. Die Verschweißung kann vorteilhafterweise eine Punkt- oder Linienverschweißung im Bereich der Ecken des Anlageabschnitts 41 beziehungsweise der Auflagefläche 22 sein.

Eine beispielhafte Verschweißung ist in Figur 3 mit dem Bezugszeichen 46 angedeutet.

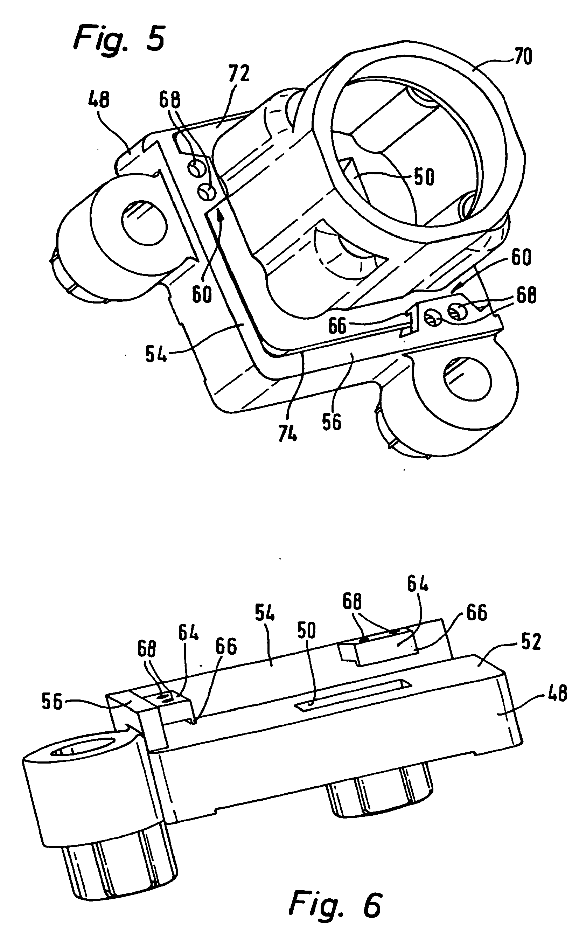

Die Figuren 5 und 6 zeigen eine zweite Ausführungsform der Erfindung mit einem Halterahmen 48, der einen zentralen Durchbruch 50 aufweist. Eine vorgesehene Auflagefläche 52 ist durch zwei senkrecht zueinander angeordnete Begrenzungsstege 54, 56 begrenzt. An den beiden Begrenzungsstegen 54 und 56 ist jeweils ein Vorspannmittel 60 angeordnet. Die Vorspannmittel 60 umfassen, entsprechend der Figur 4, Stege 64, die in Richtung der Auflagefläche 52 gerichtete Nasen 66 aufweisen.

Zur Erreichung einer gewissen elastischen Nachgiebigkeit der Stege 64 in senkrecht zur Auslagefläche 52 verlaufender Richtung, sind Aussparungen in Form von kreisförmigen Löchern 68 vorgesehen.

Der in Figur 5 dargestellte Optikträger 70 weist entsprechen dem Optikträger 38 einen umlaufenden, in Draufsicht rechteckartigen Anlageabschnitt 72 auf, dessen der Auflagefläche 52 zugewandte Seite eine Anlagefläche 74 bildet.

Die Dicke des Anlageabschnitts 72 ist dabei geringfügig größer als der Abstand der Nasen 66 zu der Auflagefläche 52. Hierdurch wird eine Anordnung des Optikträgers 70 am Halterahmen 48 unter eine Vorspannung erreicht.

Zur Justierung des Optikträgers gegenüber dem in den Figuren 5 und 6 nicht dargestellten Bildaufnehmer kann der Optikträger 70 in der Ebene der Auflagefläche 52 verschoben werden. Bei Erreichen der Solllageposition wird der Optikträger 70 vorteilhafterweise im Bereich des Anlageabschnitts 72 mit dem Halterahmen 48 dauerhaft verbunden, insbesondere durch, wie zu Figur 3 beschrieben, Laserschweißen.

## Patentansprüche

1. Kamerasystem, insbesondere für ein Umfelderfassungssystem eines Fahrzeugs, mit einem Halterahmen (18, 48) zur Halterung eines Optikträgers (38, 70), dessen Optik (40) zur Führung von einfallendem Licht auf einen Bildaufnehmer (14) dient; wobei der Halterahmen (18, 48) eine wenigstens weitgehend zur Ebene des Bildaufnehmers (14) parallel angeordnete Auflagefläche (22, 52) für eine Anlagefläche (42, 72) des Optikträger aufweist, **dadurch gekennzeichnet, dass** der Optikträger in einer Justierposition in der Ebene der Auflagefläche (22, 52) verschiebbar ist, bis eine Solllageposition der Optik gegenüber dem Bildaufnehmer erreicht wird, und dass der Optikträger in der Solllageposition dauerhaft fixierbar ist.

2. Kamerasystem nach Anspruch 1, **dadurch gekennzeichnet, dass** der Halterahmen (18, 48) oder der Optikträger (38, 70) Vorspannmittel (30, 60) umfasst, die dazu geeignet sind, den Optikträger (38, 70) gegen die Auflagefläche (22, 52) zu drücken.

3. Kamerasystem nach Anspruch 2, **dadurch gekennzeichnet, dass** die Vorspannmittel (30, 60) die Auflagefläche (22, 52) beziehungsweise Anlagefläche (42, 72) übergreifende, wenigstens senkrecht zur Auflagefläche (22, 52) beziehungsweise Anlagefläche (42, 72) elastisch nachgiebige Stege (34, 64) umfassen, die dazu geeignet sind, Abschnitte (41, 72) des Optikträgers (38, 70) beziehungsweise des Halterahmens (18, 48) zu hintergreifen.

4. Kamerasystem nach Anspruch 2 oder 3, **dadurch gekennzeichnet, dass** die (30, 60) Vorspannmittel Aussparungen (32, 68) zur Realisierung der elastischen Nachgiebigkeit aufweisen.

5. Kamerasystem nach Anspruch 1, 2 oder 3, **dadurch gekennzeichnet, dass** der Halterahmen (18, 48) derart ausgebildet ist, dass der Optikträger (38, 68) in der Solllageposition mit dem Halterahmen (18, 48) unlösbar verbindbar ist.

6. Kamerasystem nach einem der vorhergehenden Ansprüche, **dadurch gekennzeichnet, dass** der Halterrahmen (18, 48) beziehungsweise der Optikträger (38, 68) aus einem ersten Kunststoff ist und dass der Optikträger (38, 68) beziehungsweise der Halterahmen (18, 48) wenigstens abschnittsweise aus einem zweiten, derart lichttransparenten Kunststoff ist; dass zur unlösbaren Verbindung die Auflagefläche (22, 52) mit der Anlagefläche (42, 74) des Halterrahmens (18, 48) verschweißbar ist.

7. Kamerasystem nach einem der vorhergehenden Ansprüche, **dadurch gekennzeichnet, dass** die Auflagefläche (22, 52) beziehungsweise die Anlagefläche (42, 74) an wenigstens zwei Seiten wenigstens abschnittsweise durch Begrenzungsstege (22, 24, 26, 54, 56) begrenzt ist.

8. Kamerasystem nach Anspruch 7, **dadurch gekennzeichnet, dass** die Anlagefläche (42, 74) des Optikträgers (38, 68) über eine Seite, an der kein Begrenzungssteg vorgesehen ist, auf die Auflagefläche (22, 52) einschiebbar ist.

9. Kamerasystem nach einem der Ansprüche 2 bis 8,**dadurch gekennzeichnet, dass** die Vorspannmittel (30, 60) an wenigstens zwei Begrenzungsstegen (24, 28, 54, 56) angeordnet sind.

10. Kamerasystems nach einem der vorhergehenden Ansprüche, **dadurch gekennzeichnet, dass** die Auflagefläche (22, 52) größere Abmessungen aufweist als die auf der Auflagefläche (22, 52) zum Aufliegen kommende Anlagefläche (42, 74) des Optikträgers (38, 70).

11. Kamerasystems nach einem der vorhergehenden Ansprüche, **dadurch gekennzeichnet, dass** der Bildaufnehmer (14) und/oder der Halterahmen (18, 58) auf einer Leiterplatte (10) angeordnet ist.

12. Verfahren zum Justieren eines eine Optik (40) aufweisenden Optikträgers (38, 70) gegenüber einem Bildaufnehmer (14), wobei ein Halterahmen (18, 58) eine wenigstens weitgehend zur Ebene des Bildaufnehmers (14) parallel angeordnete Auflagefläche (22, 52) aufweist und wobei der Optikträger (38, 70) eine Anlagefläche (42, 74) zur Anlage gegen die Auflagefläche (22, 52) aufweist, **gekennzeichnet durch** folgende Schritte:
a) Verschieben der Anlagefläche (42, 74) des Optikträgers auf der Auflagefläche(22, 52) des Halterahmens (18, 58) solange, bis eine Solllageposition der Optik (40) gegenüber dem Bildaufnehmer (14) erreicht ist, und
b) dauerhaftes Fixieren des Optikträgers (38, 70) am Halterahmen (18, 58).

13. Verfahren nach Anspruch 12, **dadurch gekennzeichnet, dass** zur Bestimmung der Solllageposition ein geeignetes Testbild auf die Optik (40) progiziert wird und dass das Verschieben nach Schritt a) solange erfolgt, bis die Position des Testbilds dem vom Bildaufnehmer (12) aufgenommenen Bild der Solllageposition entspricht.

14. Verfahren nach Anspruch 12 oder 13, **dadurch gekennzeichnet, dass** das dauerhafte Fixieren durch Verschweißen uhd/oder Verkleben erfolgt.

## Claims

1. Camera system, in particular for an environment detection system of a vehicle, having a holding frame (18, 48) for holding an optics support (38, 70) whose optics (40) serves to guide incident light onto an image recorder (14), the holding frame (18, 48) having a bearing surface (22, 52), arranged at least largely parallel to the plane of the image recorder (14), for a seating surface (42, 72) of the optics support, **characterized in that** the optics support can be displaced in an adjusting position in the plane of the bearing surface (22, 52) until a desired position of the optics in relation to the image recorder is reached, and **in that** the optics support can be permanently fixed in the desired position.

2. Camera system according to Claim 1, **characterized in that** the holding frame (18, 48) or the optics support (38, 70) comprises prestressing means (30, 60) which are suitable for pressing the optics support (38, 70) against the bearing surface (22, 52).

3. Camera system according to Claim 2, **characterized in that** the prestressing means (30, 60) comprise webs (34, 64) which over-reach the bearing surface (22, 52) or seating surface (42, 72), are elastically compliant at least perpendicular to the bearing surface (22, 52) or seating surface (42, 72) and are suitable for gripping segments (41, 72) of the optics support (38, 70) or of the holding frame (18, 48) at the rear.

4. Camera system according to Claim 2 or 3, **characterized in that** the prestressing means (30, 60) have cutouts (32, 68) for implementing the elastic compliance.

5. Camera system according to Claim 1, 2, or 3, **characterized in that** the holding frame (18, 48) is designed in such a way that in the desired position the optics support (38, 68) can be permanently connected to the holding frame (18, 48).

6. Camera system according to one of the preceding claims, **characterized in that** the holding frame (18, 48) or the optics support (38, 68) is made from a first plastic, and **in that** the optics support (38, 68) or the holding frame (18, 48) is made at least in segments from a second plastic, which transmits light in such a way that for the purpose of permanent connection, the bearing surface (22, 52) can be welded to the seating surface (42, 74) of the holding frame (18, 48).

7. Camera system according to one of the preceding claims, **characterized in that** on at least two sides the bearing surface (22, 52) or the seating surface (42, 74) is delimited at least in segments by delimiting webs (22, 24, 26, 54, 56).

8. Camera system according to Claim 7, **characterized in that** the seating surface (42, 74) of the optics support (38, 68) can be pushed in onto the bearing surface (22, 52) on a side at which no delimiting web is provided.

9. Camera system according to one of Claims 2 to 8, **characterized in that** the prestressing means (30, 60) are arranged on at least two delimiting webs (24, 28, 54, 56).

10. Camera system according to one of the preceding claims, **characterized in that** the bearing surface (22, 52) has larger dimensions than the seating surface (42, 74) of the optics support (38, 70) which comes to bear on the bearing surface (22, 52).

11. Camera system according to one of the preceding claims, **characterized in that** the image recorder (14) and/or the holding frame (18, 58) are/is arranged on a printed circuit board (10).

12. Method for adjusting an optics support (38, 70) having an optics (40) in relation to an image recorder (12), a holding frame (18, 58) having a bearing surface (22, 52) arranged at least largely parallel to the plane of the image recorder (12), and the optics support (38, 70) having a seating surface (42, 74) for seating against the bearing surface (22, 52),
**characterized by** the following steps:
a) displacing the seating surface (42, 74) of the optics support on the bearing surface (22, 52) of the holding frame (18, 58) until a desired position of the optics (40) in relation to the image recorder (12) is reached, and
b) permanently fixing the optics support (38, 70) on the holding frame (18, 58).

13. Method according to Claim 12, **characterized in that** a suitable test image is projected onto the optics (40) in order to determine the desired position, and **in that** displacement in accordance with step a) is performed until the position of the test image corresponds to the image of the desired position recorded by the image recorder (12).

14. Method according to Claim 12 or 13, **characterized in that** the permanent fixing is performed by welding and/or bonding.

## Revendications

1. Système de caméra, notamment pour un système d'acquisition de l'environnement d'un véhicule, comprenant un cadre de maintien (18, 48) pour maintenir un porte-optique (38, 70) dont l'optique (40) sert au guidage de la lumière incidente sur un capteur d'image (14), le cadre de maintien (18, 48) présentant une surface d'appui (22, 52) pour une surface d'appui (42, 72) du porte-optique qui est au moins pour l'essentiel disposée parallèlement au plan du capteur d'image (14), **caractérisé en ce que** le porte-optique peut être coulissé dans une position d'ajustage dans le plan de la surface d'appui (22, 52) jusqu'à atteindre une position voulue de l'optique par rapport au capteur d'image et que le porte-optique peut être fixé à demeure dans la position voulue.

2. Système de caméra selon la revendication 1, **caractérisé en ce que** le cadre de maintien (18, 48) ou le porte-optique (38, 70) comprend des moyens de précontrainte (30, 60) qui sont conçus pour pousser le porte-optique (38, 70) contre la surface d'appui (22, 52).

3. Système de caméra selon la revendication 2, **caractérisé en ce que** les moyens de précontrainte (30, 60) comprennent des brides (34, 64) flexibles par effet élastique qui recouvrent la surface d'appui (22, 52) ou la surface d'appui (42, 72), au moins perpendiculairement à la surface d'appui (22, 52) ou à la surface d'appui (42, 72), lesquelles sont conçues pour venir en prise par l'arrière avec des sections (41, 72) du porte-optique (38, 70) ou du cadre de maintien (18, 48).

4. Système de caméra selon la revendication 2 ou 3, **caractérisé en ce que** les moyens de précontrainte (30, 60) présentent des creux (32, 68) pour réaliser la flexibilité élastique.

5. Système de caméra selon la revendication 1, 2 ou 3, **caractérisé en ce que** le cadre de maintien (18, 48) est configuré de telle sorte que le porte-optique (38, 68), dans la position voulue, peut être relié de manière inamovible avec le cadre de maintien (18, 48).

6. Système de caméra selon l'une des revendications précédentes, **caractérisé en ce que** le cadre de maintien (18, 48) ou le porte-optique (38, 68) est constitué d'une première matière plastique et que le porte-optique (38, 68) ou le cadre de maintien (18, 48), au moins dans certaines sections, est constitué d'une deuxième matière plastique transparente à la lumière de sorte que la surface d'appui (22, 52) peut être soudée avec la surface d'appui (42, 74) du cadre de maintien (18, 48) pour réaliser la liaison inamovible.

7. Système de caméra selon l'une des revendications précédentes, **caractérisé en ce que** la surface d'appui (22, 52) ou la surface d'appui (42, 74) est délimitée au moins par sections par des nervures de délimitation (22, 24, 26, 54, 56) sur au moins deux côtés.

8. Système de caméra selon la revendication 7, **caractérisé en ce que** la surface d'appui (42, 74) du porte-optique (38, 68) peut être insérée sur la surface d'appui (22, 52) par un côté sur lequel n'est prévue aucune nervure de délimitation.

9. Système de caméra selon l'une des revendications 2 à 8, **caractérisé en ce que** les moyens de précontrainte (30, 60) sont disposés sur au moins deux nervures de délimitation (24, 28, 54, 56).

10. Système de caméra selon l'une des revendications précédentes, **caractérisé en ce que** la surface d'appui (22, 52) présente des dimensions plus grandes que la surface d'appui (42, 74) du porte-optique (38, 70) qui vient reposer sur la surface d'appui (22, 52).

11. Système de caméra selon l'une des revendications précédentes, **caractérisé en ce que** le capteur d'image (14) et/ou le cadre de maintien (18, 58) est disposé sur un circuit imprimé (10).

12. Procédé pour ajuster un porte-optique (38, 70) qui présente une optique (40) par rapport à un capteur d'image (12), un cadre de maintien (18, 58) présentant une surface d'appui (22, 52) qui est au moins pour l'essentiel disposée parallèlement au plan du capteur d'image (12) et le porte-optique (38, 70) présentant une surface d'appui (42, 74) destinée à être appliquée contre la surface d'appui (22, 52), **caractérisé par** les étapes suivantes :
a) Coulissement de la surface d'appui (42, 74) du porte-optique sur la surface d'appui (22, 52) du cadre de maintien (18, 58) jusqu'à atteindre une position voulue de l'optique (40) par rapport au capteur d'image (12) et
b) Fixation à demeure du porte-optique (38, 70) sur le cadre de maintien (18, 58).

13. Procédé selon la revendication 12, **caractérisé en ce que** pour déterminer la position voulue, une image de test appropriée est projetée sur l'optique (40) et que le coulissement selon l'étape a) est effectué jusqu'à ce que la position de l'image de test corresponde à l'image de la position voulue enregistrée par le capteur d'image (12).

14. Procédé selon la revendication 12 ou 13, **caractérisé en ce que** la fixation à demeure est réalisée par soudage et/ou collage.
